# EUROPÄISCHE PATENTSCHRIFT

(11) **EP 2 010 883 B1**
(45) Veröffentlichungstag und Bekanntmachung des Hinweises auf die Patenterteilung: **12.06.2013**
(21) Anmeldenummer: 07724667.6
(22) Anmeldetag: 27.04.2007
(51) Int. Cl.: G01L 5/24, G01L 5/00, H01L 41/09

(54) **VERBINDUNGSBAUTEIL MIT TEMPERATURFESTEM SENSORELEMENT**
CONNECTOR COMPONENT WITH TEMPERATURE-RESISTANT SENSOR ELEMENT
COMPOSANT DE JONCTION PRÉSENTANT UN ÉLÉMENT DÉTECTEUR THERMORÉSISTANT

(30) Priorität: 27.04.2006 DE 202006006990 U
(43) Veröffentlichungstag der Anmeldung: 07.01.2009
(73) Patentinhaber: Intellifast GmbH, 67346 Speyer (DE)
(72) Erfinder: ZENDEHROUD, Jafar, 34125 Kassel (DE); HÖRING, Gert, 76185 Karlsruhe (DE)
(74) Vertreter: Hörschler, Wolfram Johannes
(86) Internationale Anmeldenummer: PCT/EP2007/003739
(87) Internationale Veröffentlichungsnummer: WO 2007/124924

(56) Entgegenhaltungen:
- WO-A-92/03665
- WO-A-2006/015813

## Beschreibung

### Technisches Gebiet

Mechanische Verbindungsbauteile, wie z. B. Schrauben oder Bolzen, werden mittels Ulträschall-Messverfahren auf ihre Vorspannkraft oder ihre Spannkraft hin überprüft. Dazu wird die Signallaufzeit von Ultraschallwellen, die mit einer oder mehreren separaten, häufig vordefinierten Arbeitsfrequenzen in das jeweilige Verbindungsbauteil eingekoppelt werden, vermessen. Im Zuge der fortschreitenden Materialwissenschaften sind in den letzten Jahren eine Vielzahl von Verbund- und gradierten Werkstoffen sowie Speziallegierungen eingeführt worden, aus denen Verbindungsbauteile, wie Bolzen oder Schrauben, gefertigt werden können, deren Materialeigenschaften höhere Anforderungen an ein Messverfahren zur Bestimmung der Vorspannkraft stellen.

### Stand der Technik

Aus DE 42 25 035 A1 sowie DE 42 32 254 A1 sind Ultraschallprüfverfahren bekannt. Gemäß dieser Verfahren ist zur Ansteuerung eines in einer Übertragungsstrecke angeordneten Ultraschallwandlers ein frequenzmoduliertes Chirp-Signal x(t) vorgesehen, dessen momentane Frequenz f nicht linear mit der Zeit t moduliert wird. Der zeitliche Verlauf f(t) der momentanen Frequenz des frequenzmodulierten Chirp-Signals x(t) an eine Übertragungsfunktion H(f) ist an die vorgegebene Übertragungsstrecke angepasst. Die zeitliche Änderung der momentanen Frequenz f des frequenzmodulierten Chirp-Signals x(t) ist derart mit dem zu dieser Frequenz f gehörenden Wert der Übertragungsfunktion H(f) der Übertragungsstrecke korreliert, dass bei Frequenzen f mit niedrigem zugehörigen Wert der Übertragungsfunktion H(f) die Geschwindigkeit der Frequenzänderung kleiner ist als bei Frequenzen f mit hohem zugehörigen Wert der Übertragungsfunktion H(f).

Zur Ansteuerung des Ultraschallwandlers dient ein rechteckförmiges Chirp-Signal x'(t). Ferner wird eine Einrichtung zur Ultraschallprüfung mit einem Signalgenerator zur Ansteuerung eines Ultraschallwandlers mit einem frequenzmodulierten Chirp-Signal x(t) vorgeschlagen, dessen momentane Frequenz f nicht linear von der Zeit abhängt, sowie ein Pulskompressionsfilter zum Umwandeln des von diesem oder einem anderen Ultraschallwandler empfangenen Chirp-Signals y(t) in einen kurzen Empfangsimpuls z(t).

Aus DE 10 2004 038 638 ist ein Verfahren zur Bestimmung der Vorspannkraft von Verbindungsbauteilen durch Ultraschallanregung bekannt. Mit diesem Verfahren wird die Spannkraft von Verbindungsbauteilen, z. B. Schrauben oder Bolzen, durch breitbandige Ultraschallanregung gemessen. Dazu wird ein Pulsgenerator eingesetzt, der einen Ultraschallpuls mittels statistisch verteilter Phasenlage von genutzten und/oder auflösbaren Frequenzkomponenten mit vorgebbarer Pulsbreite generiert. Die Pulsbreite ist derart an Abstände von Ultraschallpuls-Echos angepasst, dass keine Überlappung einzelner unterschiedlicher Reflexe auftritt und die maximale mögliche Pulsdauer erreicht wird. Das empfangene Ultraschallpuls-Echo wird bezüglich mindestens eines Reflexes zeitlich selektiert und einem Transformationsverfahren unterworfen, derart, dass für einen definierten, mit dem Ultraschall in Bezug stehenden Zeitpunkt alle Frequenzbeiträge zeitlich oder hinsichtlich der Phase verschoben werden.

Aus DE 10 2004 038 638 ist zudem ein Verbindungsbauteil bekannt, in dessen Kopfbereich sich ein Ultraschalltransducer befindet, dessen Aufbau als Schichtaufbau ausgebildet ist.

Als Ultraschalltransducer, die auch als Ultraschallsensoren bezeichnet werden, kommen heute z. B. aufgeklebte Sensoren mit PVDF-Folien zum Einsatz. Die mit PVDF-Folien ausgeführten Ultraschallsensoren sind sehr empfindlich und werden z. B. auf Schraubenköpfe von als Schrauben ausgebildeten Verbindungsbauteilen aufgebracht. Das Aufbringen und Fixieren an einem Schraubenkopf erfolgt in der Regel über eine Kleberschicht. PVDF-Folien haben den Nachteil, dass diese nicht temperaturbeständig sind. Ab einer Temperatur von ca. 70 °C tritt in der PVDF-Folie ein Alterungsprozess ein, der im Extremfall zur Auflösung der PVDF-Folie führen kann. Das grundsätzliche Problem bei PVDF-Folien ist die Auflösung der Folie über die Betriebszeit gesehen beziehungsweise eine Teilablösung des Folienmaterials. Wird nun die Vorspannkraft oder die Spannkraft eines schraubenförmig ausgebildeten Verbindungsbauteils mit Hilfe eines Ultraschallsensors gemessen, der aus PVDF-Folie gefertigt ist, so sind die z. B. auftretenden Teilablösungen aufgrund hoher Temperaturbeanspruchung unterhalb der PVDF-Folie nicht sichtbar. Aufgrund der Teilablösungen und der unbekannten lokalen Lage der Teilablösungen wird bei einer Ultraschallmessung mit einem derart vorgeschädigten Ultraschallsensor ein falsches Messergebnis erhalten, da die Signallaufzeiten aufgrund des durch die Teilablösungen verlängerten Weges des Ultraschallsignals verfälscht werden. Bei einer vollständigen Auflösung der PVDF-Folie ist im Extremfall eine Ultraschallmessung gar nicht mehr möglich. Die auftretenden Verfälschungen können zu Fehlern bis zu 40 % führen, die ein auf einer Laufzeitmessung eines Ultraschallsignals beruhendes Ergebnis daher erheblich verfälschen, wenn nicht gar unbrauchbar machen können.

Ferner ist bei Ultraschallmessungen der Einsatz eines Koppelgels bekannt, was jedoch für die Ermittlung einer Vorspannkraft in einem schraubenförmigen Verbindungsbauteil ungeeignet ist, da durch kleinste Unterschiede beim Positionieren des Prüfkopfes Ultraschallankopplungsvorlaufzeitendifferenzen entstehen, die größer sind als die Messgröße selbst. Mit Ultraschallmessungen, bei denen ein Koppelgel eingesetzt wird, sind in der Regel die erforderlichen Genauigkeitsklassen nicht zu erreichen.

*Aus WO 92*/*03665 ist ein lastanzeigendes Verbindungselement bekannt, bei dem die Last mittels Ultraschall gemessen wird. Zur Erzeugung von Ultraschall werden zwei Elektroden auf das Verbindungselement aufgebracht, wobei ein Film mit piezoelektrischen Eigenschaften mit Hilfe eines Aufdampfprozesses auf einer der Elektroden ausgebildet wird.*

### Darstellung der Erfindung

Angesichts der skizzierten Nachteile der Lösungen des Standes der Technik liegt der Erfindung die Aufgabe zugrunde, ein Verbindungsbauteil mit integriertem Ultraschallsensor zur Verfügung zu stellen, welches insbesondere bei höheren Temperaturen von > 350 °C einsatzfähig ist und beständig über eine lange Betriebszeit bleibt. Daneben soll der Ultraschallsensor oxidationsfest ausgebildet sein.

Erfindungsgemäß wird ein insbesondere schraubenförmig ausgebildetes Verbindungsbauteil vorgeschlagen, welches an einem frei zugänglichen Ende einen einen Schichtaufbau aufweisenden Ultraschallsensor umfasst. Der Ultraschallsensor stellt einen Bestandteil des schraubenförmig ausgebildeten Verbindungsbauteiles dar und ist insbesondere auf einer Stirnfläche am Schraubenkopf und dem diesem gegenüberliegenden frei zugänglichen Schraubenende, d. h. einer Stirnseite des Verbindungsbauteiles nach dem Gewindeauslauf, zugeordnet. Sowohl die den Schraubenkopf darstellende Stirnseite als auch das diesem gegenüberliegende Schraubenende stellt eine frei zugängliche Stelle dar, an welcher ein Ultraschallsignal in das Verbindungsbauteil eingekoppelt werden kann.

Der Ultraschallsensor umfasst bevorzugt mindestens eine Elektrodenschicht, wobei einzelne Elektroden gegeneinander isoliert sind. Des Weiteren umfasst der Schichtaufbau des vorgeschlagenen Verbindungsbauteils mit integriertem Ultraschallsensor eine mechanische Schutzschicht sowie eine Schicht aus einem piezoelektrische Eigenschaften aufweisenden Material. Die genannten mindestens drei Schichten des Schichtaufbaus des Ultraschallsensors werden an dem frei zugänglichen Ende des bevorzugt schraubenförmig ausgebildeten Verbindungsbauteils in Sputtertechnik aufgebracht. Im Wege des Aufsputtems wird durch Anlegen eines elektrischen Feldes an einer Sputtereinrichtung ein Aufsputtern kleinster Teilchen des jeweiligen Materials erreicht, wodurch die einzelnen Schichten des als Schichtaufbau ausgebildeten Ultraschallsensors unter Erzielung einer hohen Adhäsion von mehr als 40 Newton pro mm² auf die jeweilige frei zugängliche Stirnseite des Verbindungsbauteiles, im vorliegenden Falle z. B. auf die Stirnseite des Schraubenkopfes oder auf die dieser gegenüberliegende Stirnseite am Ende des Gewindeauslaufs, aufgebracht werden. Aufgrund der hohen Adhäsion sind sämtliche Ankoppelfehler zwischen dem Ultraschallsensorelement und der jeweiligen Stirnseite des Verbindungsbauteiles eliminiert. Im Vergleich zum Kleben ist die erzielte Adhäsion hochtemperaturbeständig.

Das Verbindungsbauteil wird bevorzugt aus gängigen Schraubenwerkstoffen, wie z. B. hochlegierten Stählen, Sonderstählen, Titan und seinen Legierungen, so z. B. TiAl6V4, Aluminium und seinen Legierungen, Messing, Inconel (Nickellegierung) sowie amagnetischen Stählen, wie z. B. A286-Stahl, gefertigt.

Der Schichtaufbau des mindestens dreischichtig ausgebildeten Ultraschallsensors weist, in Dünnfilmtechnik ausgeführt, auf einer der jeweils frei zugänglichen Stirnseiten aufgebrachte Einzelschichten auf, wobei die jeweils frei zugängliche Stirnseite des Verbindungsbauteiles mit dem piezoelektrische Eigenschaften aufweisenden Material besputtert wird.

Die erfindungsgemäß vorgeschlagenen Verbindungsbauteile mit integriertem Ultraschallsensor zeichnen sich durch eine hohe Temperaturbeständigkeit über eine lange Betriebszeit aus. Sie sind zum Einsatz z. B. an extrem hohe Temperaturen aufweisenden Flugtriebwerken, insbesondere in der Nähe der Brennkammer, geeignet, wobei dort eine Erwärmung des Verbindungsbauteils auf ein Temperaturniveau zwischen 350 °C und 400 °C erreicht wird. Bei einer angenommenen Temperatur innerhalb der Brennkammer von 2000 °C sind außerhalb der Brennkammer an einem Flugtriebwerk montierte Verbindungsbauteile, wie z. B. Schrauben oder Bolzen, Temperaturen von mehr als 500 °C ausgesetzt.

Neben Anwendungen im Flugtriebwerksbereich können die erfindungsgemäß vorgeschlagenen Verbindungsbauteile mit integriertem Ultraschallsensor auch bei Kraftwerken eingesetzt werden, so z. B. bei Kernkraftwerken. In der Regel sind in Kraftwerken eingesetzte Verbindungsbauteile, abgesehen von jährlich stattfindenden Revisionen, einer gleichmäßigen Temperaturbeanspruchung ausgesetzt, während im Flugzeugbau und insbesondere im Triebswerkbau eingesetzte Verbindungsbauteile einer zyklischen Beanspruchung ausgesetzt sind. Die Zyklen liegen so z. B. bei Kurz-, Mittel- und Langstreckenflügen in einer zeitlichen Dauer von 2 bis zu mehreren Stunden.

Der erfindungsgemäß vorgeschlagene, am Verbindungsbauteil integrierte Ultraschallsensor umfasst innerhalb seines Schichtaufbaus ein piezoelektrische Eigenschaften aufweisendes Material. Der piezoelektrische Effekt wird durch Anlegen einer Spannung an dieses piezoelektrische Eigenschaften aufweisende Material benutzt, indem dessen räumliche Ausdehnung ausgenutzt wird. Bei der angelegten Spannung handelt es sich bevorzugt um eine Wechselspannung, so dass diese ein periodisches Ausdehnen und Zusammenziehen des piezoelektrische Eigenschaften aufweisenden Materials, d. h. ein Schwingen, bedingt. Da der Ultraschallsensor fest mit dem Verbindungsbauteil verbunden ist, werden die Schwingungen als Wellen aufgrund der verwendeten Frequenz im Megahertz-Bereich als Ultraschallwellen in das bevorzugt als Schraube ausgebildete Verbindungsbauteil eingekoppelt. Der erfindungsgemäß vorgeschlagene, im Verbindungsbauteil integrierte Ultraschallsensor zeichnet sich des Weiteren durch einen extrem breitbandigen Arbeitsfrequenzbereich aus. Ein weiterer durchschlagender Vorteil liegt darin, dass mit dem Ultraschallsensor gleichzeitig longitudinale und transversale Ultraschallwellen im Verbindungsbauteil erzeugt werden können, was hinsichtlich einer Signalkonsistenz des erhaltenen Signals von durchschlagender Bedeutung ist.

Nach Erreichen der Curie-Temperatur verschwindet dieser piezoelektrische Effekt, demnach ist oberhalb der Curie-Temperatur, welche abhängig vom eingesetzten, piezoelektrische Eigenschaften aufweisenden Material ist, eine Ultraschallmessung nicht möglich. Erst wenn die Temperatur des Verbindungsbauteiles die Curie-Temperatur des jeweils eingesetzten, piezoelektrische Eigenschaften aufweisenden Materials unterschreitet, kann erneut eine Ultraschallmessung vorgenommen werden.

Mit dem erfindungsgemäß vorgeschlagenen Verbindungsbauteil mit integriertem Ultraschallsensor wird einerseits das Phänomen der Auflösung beziehungsweise Teilablösung von PVDF-Ultraschallsensoren vermieden, so dass eine zuverlässige Ultraschallmessung möglich ist. Das erfindungsgemäß vorgeschlagene Verbindungsbauteil mit integriertem Ultraschallsensor ist auch nach dem Durchlauf einer Vielzahl von den oben beschriebenen Temperaturzyklen sowohl funktionsfähig als auch in der Lage, zuverlässige Messergebnisse zu liefern, sobald die Bauteiltemperatur unterhalb der Curie-Temperatur des jeweils eingesetzten piezoelektrische Eigenschaften aufweisenden Materials liegt.

Der erfindungsgemäß vorgeschlagene, am Verbindungsbauteil integrierte Ultraschallsensor ist einerseits äußerst kompaktbauend, weist andererseits eine enorme Hitzebeständigkeit auf, die auch nach mehreren Betriebszyklen, so z. B. an einem Flugtriebwerk, noch in einem hohen Maße vorliegt, so dass zuverlässige Signale erhalten werden können; des Weiteren zeichnet sich der erfindungsgemäß vorgeschlagene, am Verbindungsbauteil integrierte Ultraschallsensor durch eine hohe Lebensdauer aus, was durch die Materialauswahl begünstigt wird.

### Zeichnung.

Anhand der Zeichnung wird die Erfindung nachstehend eingehender beschrieben.

Es zeigt:
- Figur 1: eine Vorrichtung zur Durchführung einer Ultraschallmessung an einem als Schraube ausgebildeten Verbindungsbauteil und
- Figur 2: einen in vergrößertem Maßstab dargestellten Schnitt durch den Schichtaufbau des am Verbindungsbauteil integrierten Ultraschallsensors,
- Figur 3: eine weitere Ausführungsform eines in Schichten aufgebauten Ultraschallsensors, eingebettet in das Verbindungsbauteil.

### Ausführungsvarianten

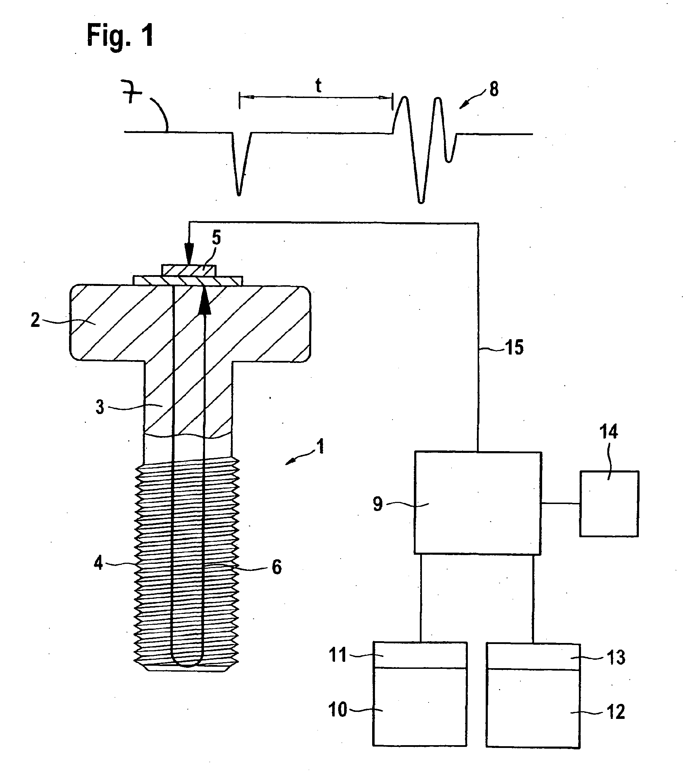

In der Darstellung gemäß Figur 1 ist ein Verbindungsbauteil 1 als Schraube ausgebildet. Daneben kann das Verbindungsbauteil auch als Stift oder Bolzen ausgebildet sein.

Das in Figur 1 dargestellte Verbindungsbauteil 1 umfasst einen Schraubenkopf 2 und einen Schaft 3. Unterhalb des Schaftes 3 erstreckt sich ein Gewindeteil 4, welches in ein dazu komplementäres Gewinde eines Bauteils eingeschraubt oder mit einer Schraubenmutter versehen werden kann. Oberhalb des Schraubenkopfes 2 befindet sich ein Ultraschallsensor 5 für einen in das Verbindungsbauteil 1 einzukoppelnden Ultraschallpuls 7. Der am Ultraschallsensor 5 in das Verbindungsbauteil 1 eingekoppelte Ultraschallpuls 7 verläuft entlang eines Laufweges 6 durch das Verbindungsbauteil 1 und tritt an dem Ultraschallsensor 5 für den Ultraschallpuls 7 wieder aus dem Verbindungsbauteil 1 als elektrisches Ultraschallpuls-Echo 8 aus. Mit t ist die Zeit bezeichnet, die zwischen dem Eintritt des Ultraschallpulses 7 in das Verbindungsbauteil 1 und dem Austreten des Ultraschallpuls-Echos 8 aus dem Verbindungsbauteil 1 vergeht, d. h. die Laufzeit des Ultraschallsignals.

Bei Einkopplung des Ultraschallpulses 7 und zur Auskopplung des elektrischen Ultraschall-Echos 8 in das beziehungsweise aus dem Verbindungsbauteil 1, erstreckt sich eine Signalübertragungsleitung 15, die als Coaxialkabel beschaffen sein kann, mit einer der Signalübertragungsleitung 15 innewohnenden Impedanz zwischen dem Ultraschallsensor 5 und einem Ultraschallmessgerät 9. Das Ultraschallmessgerät 9 ist mit einem Rechner 14, bei dem es sich beispielsweise um einen PC handeln kann, verbunden. Ferner steht das Ultraschallmessgerät 9 mit einem Pulsgenerator 10 (arbitrary function generator, Arbiträrgenerator) in Verbindung, dem ein erster Leistungsverstärker 11 zugeordnet sein kann. Durch den Pulsgenerator 10 mit erstem Leistungsverstärker 11 werden die Ultraschallpulse 7 unter Zwischenschaltung des Ultraschallsensors 5 erzeugt. Zur Signalerfassung von aus dem Verbindungsbauteil 1 ausgekoppelten elektrischen Ultraschallpuls-Echos 8 dient ein Transientenrekorder 12, der einen Leistungsverstärker 13 umfassen kann. Zur Bestimmung der zur Zeit der Messung der Spannkraft vorliegenden Laufzeit in der Signalübertragungsleitung 15 und der Laufzeiten der Ultraschallsignale durch das elektronische Messgerät 9 wird die Reflexion eines elektrischen Anregungssignals am Ende (beim Ultraschallsensor 5) der Signalübertragungsleitung 15 genutzt.

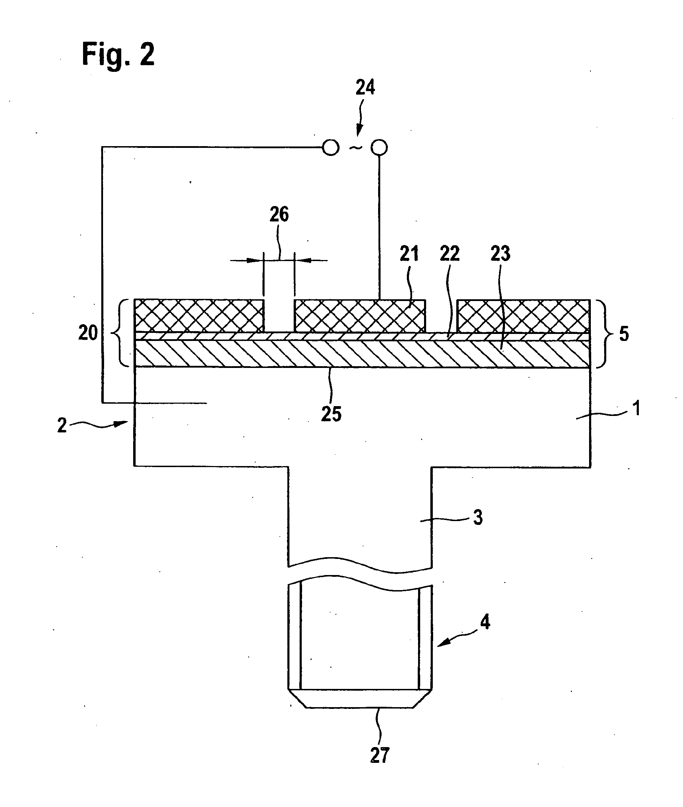

Aus der Darstellung gemäß Figur 2 geht das Verbindungsbauteil ohne Auswertungsperipherie, jedoch mit integriertem Ultraschallsensorelement in vergrößertem Maßstab hervor.

Das in Figur 2 dargestellte Verbindungsbauteil 1 ist bevorzugt als Schraube ausgeführt. Daneben kann das Verbindungsbauteil 1 auch als Bolzenstift oder Niet oder dergleichen ausgebildet sein. Das Verbindungsbauteil 1 umfasst den Schaft 3, an dem ein Gewindeteil 4 ausgebildet ist. Auf einem ersten Ende 25, welches die Stirnseite des Schraubenkopfes 2 ist, befindet sich der Ultraschallsensor 5, der einen Schichtaufbau 20 aufweist. Der Schichtaufbau 20 umfasst mindestens drei Schichten, wobei unmittelbar auf das erste Ende 25, d. h. die Stirnseite des Schraubenkopfes 2, eine Schicht 23 aus einem piezoelektrische Eigenschaften aufweisenden Material aufgesputtert ist. Das Aufsputtern der Schicht 23 erfolgt in einer Schichtdicke von wenigen µm. Auf die Schicht 23 ist eine mechanische Schutzschicht 22 aufgesputtert, deren Schichtdicke geringer ist als die Schicht der darunter liegenden Schicht 23 aus einem piezoelektrische Eigenschaften aufweisenden Material. Schließlich umfasst der Schichtaufbau 20 gemäß der Darstellung in Figur 2 mindestens eine Elektrodenschicht 21. Innerhalb der Elektrodenschicht 21 sind einzelne Elektroden voneinander isoliert, angedeutet durch einen Abstand 26.

Der in Figur 2 dargestellte Ultraschallsensor 5 als Schichtaufbau 20 kann auch an einem zweiten Ende 27, welches ebenfalls frei zugänglich ist, aufgesputtert sein.

Was in Figur 2 exemplarisch am Beispiel eines als Schraube ausgebildeten Verbindungsbauteil 1 dargestellt ist, lässt sich auch an einem Verbindungsbauteil 1 durchführen, welches als Bolzen, als Niet oder als Stift ausgeführt sein kann.

Der erfindungsgemäß vorgeschlagene, im Verbindungsbauteil 1 integrierte Ultraschallsensor 5 in Schichtaufbau 20 zeichnet sich durch eine hohe Adhäsion z. B. an dem als Stirnseite ausgebildeten ersten Ende 25 des Verbindungsbauteiles 1 aus. Aufgrund der hohen Adhäsion von mehr als 40 Newton pro mm² sind sämtliche Ankoppelfehler, welche die Signallaufzeit zwischen dem Ultraschallsensor 5 und dem Verbindungsbauteil 1 beeinträchtigen können - insbesondere eine Kleberschicht zwischen der Schicht 23 und dem ersten Ende 25 - eliminiert. Dadurch lässt sich eine erheblich genauere Signallaufzeitmessung und damit eine wesentlich genauere Ermittlung der Vorspannkraft beziehungsweise der Spannkraft des Verbindungsbauteiles 1 erreichen. Das Verbindungsbauteil 1 kann aus der Gruppe der nachfolgend aufgeführten Werkstoffe gefertigt werden: hochlegierte Stähle, Sonderstähle, Titan und seine Legierungen, insbesondere TiAl6V4, sowie Aluminium und seine Legierungen, ferner Messing, Inconel (Nickellegierung) sowie Stählen, wie z. B. A286, die amagnetisch sind.

Der erfindungsgemäß vorgeschlagene Ultraschallsensor 5 ist selbst nach Durchlaufen einer Vielzahl von Temperaturzyklen, die durch eine kurze Temperaturerhöhungszeit von wenigen Minuten, eine andauernde Temperaturbelastung auf einem erhöhten Temperaturniveau zwischen 350 °C und 500 °C im Extremfalle bis zu 1000 °C sowie eine nur langsam erfolgenden Abkühlung gekennzeichnet sind, voll funktionsfähig, es treten keine Teilablösungen innerhalb des Schichtaufbaus 20 auf, die die Signallaufzeit eines Ultraschallsignals beeinträchtigen können.

Da jede Schicht innerhalb des Schichtaufbaus 20, d. h. die mindestens eine Elektrodenschicht 21, die mindestens eine mechanische Schutzschicht 22 und die mindestens eine piezoelektrische Schicht 23, im Wege der Sputtertechnik aufgebracht ist, herrschen zwischen den einzelnen Schichten 21, 22, 23 des Schichtaufbaus 20 jeweils hohe Adhäsionskräfte nicht nur zwischen der Kontaktseite der Schicht 23 aus einem piezoelektrische Eigenschaften aufweisenden Material und dem ersten Ende 25 des Verbindungsbauteiles 1, sondern auch zwischen den Schichten 21, 22, 23 untereinander. Eine Isolation von Einzelelektroden innerhalb der Elektrodenschicht 21 erfolgt vorzugsweise durch eine Maskierungstechnik, durch welche die in Figur 2 dargestellten Abstände 26 zwischen den Einzelelektroden der Elektrodenschicht 21 erzeugt werden.

Abhängig vom gewählten Material, aus dem die Schicht 23 gefertigt wird und welches piezoelektrische Eigenschaften aufweist, lässt sich nach dem Unterschreiten der jeweiligen Curie-Temperatur des Materials mit piezoelektrischen Eigenschaften, aus dem die Schicht 23 gefertigt wird, ein zuverlässiges Ultraschallsignal erzeugen, was eine aussagekräftige Ultraschallmessung ermöglicht.

Bevorzugt übersteigt die Dicke der Schicht 23 aus dem Material mit piezoelektrischen Eigenschaften die Dicke der mechanischen Schutzschicht 22 um ein Mehrfaches, während die Schichtdicke, in der die Elektrodenschicht 21 ausgeführt ist, im Wesentlichen der Dicke der Schicht 23 aus einem Material mit piezoelektrischen Eigenschaften entsprechen kann.

Gemäß einer weiteren vorteilhaften Ausführungsform ist das erfindungsgemäß vorgeschlagene Sensorelement in einer Ausnehmung oder Vertiefung an einer ersten Stirnseite des Verbindungsbauteiles aufgenommen.

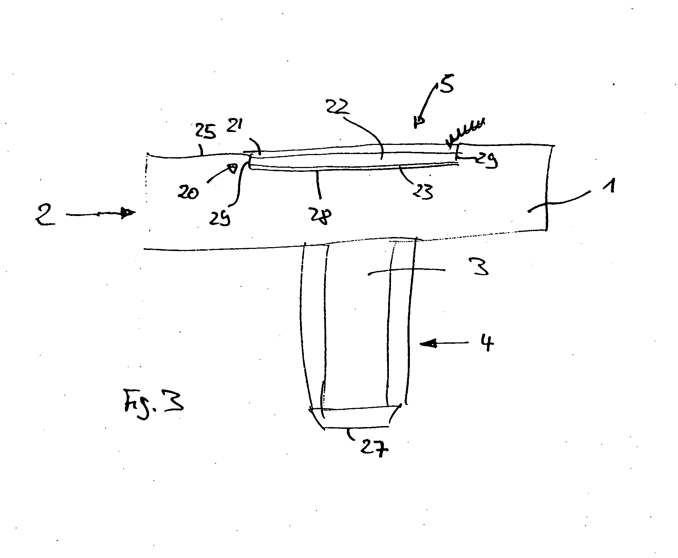

Aus Figur 3 geht hervor, dass das in der Ausführungsform gemäß Figur 3 als Schraube beschaffene Verbindungsbauteil 1 analog zur in Figur 2 dargestellten Ausführungsform den Schraubenkopf 2, den Schaft 3, das Gewindeteil 4 und den Ultraschallsensor 5 aufnimmt. Der Ultraschallsensor 5 gemäß der Darstellung in Figur 3 ist im Schichtaufbau 20 ausgebildet und umfasst die Elektrodenschicht 21, die mechanische Schutzschicht, vergleiche Bezugszeichen 22, sowie die piezoelektrische Schicht 23. Der Schichtaufbau 20 des Ultraschallsensors 5 ist in einer Ausnehmung, beziehungsweise Vertiefung 28 am ersten Ende 25 des Verbindungsbauteiles 1 eingelassen. Die Ausnehmung beziehungsweise Vertiefung 28 am ersten Ende 25 des Verbindungsbauteiles 1 umfasst des Weiteren eine seitliche Begrenzungswand 29. Die seitliche Begrenzungswand 29 bewirkt in vorteilhafter Weise, dass der Schichtaufbau 20 des Ultraschallsensors 5 vom Material des Verbindungsbauteiles 1, bei dem es sich um ein Edelstahlmaterial oder um einen hochlegierten Stahl handelt, die Seitenflächen des Schichtaufbaus 20, d.h. der Elektrodenschicht 21, der mechanischen Schutzschicht 22 sowie der piezoelektrischen Schicht 23 überdeckt. Dadurch kann dem Eindiffundieren von Wasserstoffmolekülen insbesondere in die piezoelektrische Schicht 23, der Oxidation und Deoxidation der piezoelektrischen Schicht 23, sowie der Kontamination durch Fremdstoffe in die piezoelektrische Schicht 23, wirksam vorgebeugt werden. Bei einem Eindiffundieren von Fremdmolekülen durch Hohlkanäle in die piezoelektrische Schicht 23 käme es dort zu einer Absenkung des elektrischen Widerstandes der piezoelektrischen Schicht 23 sowie bei höheren Temperaturen zu einer chemischen Umsetzung der piezoelektrischen Schicht 23, was auf längere Sicht zum Totalausfall des Ultraschallsensors 5 führt.

Durch die kompakt ausgebildete Schutzschicht 22 wird das Eindiffundieren von FremdMolekülen in die piezoelektrische Schicht 23 sowie die Oxidation und Deoxidation der piezoelektrischen Schicht 23 verhindert. Ein seitlicher Schutz des Schichtaufbaus 20 des Ultraschallsensors 5 gegen Oxidation und Deoxidation sowie gegen Eindiffundieren von Wasserstoffmoleküle erfolgt durch dessen Einbettung in die Ausnehmung bzw. Vertiefung 28 am ersten Ende 25 des Verbindungsbauteils 1.

Wie aus der Darstellung gemäß Figur 3 hervorgeht, ist der Schichtaufbau 20 des Ultraschallsensors 5 in die Ausnehmung beziehungsweise die Vertiefung 28 am ersten Ende 25 in die Stirnseite des Verbindungsbauteiles 1 eingelassen. Der in der Ausführungsform gemäß Figur 3 im Schichtaufbau 20 aufgebaute Ultraschallsensor 5 wird bei Temperaturen von mindestens 200 °C, bevorzugt bei Temperaturen zwischen 250 °C und 950 °C eingesetzt. Die piezoelektrische Schicht 23 wird aus einem Material wie beispielsweise ZnO gefertigt. Ab Überschreiten der Curie-Temperatur entfällt der Piezo-Effekt.

Die piezoelektrische Schicht 23 ist gegen Oxidation und Deoxidation zu schützen. Bei dem Material, aus welchem die piezoelektrische Schicht 23 innerhalb des Schichtaufbaus 20 gefertigt wird, kann auch Aluminiumnitrid oder Siliziumoxid oder Bariumtitanat eingesetzt werden. Bei dem Material, aus welchem das Verbindungsbauteil 1 gefertigt wird, kann es sich um Sonderstähle handeln, insbesondere nicht-oxidierte Sonderstähle sowie hochlegierte Stähle wie TiAl6V4.

Die innerhalb des Schichtaufbaus 20 angeordnete mechanische Schutzschicht 22 wird bevorzugt in Verbindung mit N, C oder O gefertigt, wobei es sich bei dem Verbindungsmaterial bevorzugt um ein metallisches Material handelt. Die mechanische Schutzschicht 22 kann aus Carbiden, Nitriden, Oxiden, jeweils in Kombination mit Titan, Zirkon, Silizium, Aluminium oder Chrom gefertigt sein.

Bei der Elektrodenschicht 21 können folgende Materialien gewählt werden: In einer ersten Ausführungsform ist es möglich, Metalle mit oder ohne Stickstoff, zum Beispiel Titan und TiN oder dergleichen sowie Chrom und CrN, einzusetzen, oder in einer weiteren Ausführungsform als Metalllegierung, so zum Beispiel NiCr, einzusetzen. Bei der Wahl des Materials, aus welchem die Elektrodenschicht 21 des Schichtaufbaus 20 des Ultraschallsensors 5 gefertigt wird, werden bevorzugt Elemente der Gruppen IV, IVb, VIb, VIIIb, Ib, so zum Beispiel Sn, Ag, Ti oder andere metallische Verbindungen untereinander, so zum Beispiel NiCr, eingesetzt.

Bei dem Schichtaufbau 20, als welcher der erfindungsgemäß vorgeschlagene Ultraschallsensor 5 ausgebildet ist, ist dafür Sorge zu tragen, dass der Schichtaufbau 20 kompakt und porenfrei ausgebildet wird.

Bei dem Verbindungsbauteil 1 handelt es sich um eine Schraube, in deren Schraubenkopf 2 der erfindungsgemäß vorgeschlagene Ultraschallsensor 5 eingelassen ist. Das Verbindungsbauteil 1 umfasst einen Schraubenkopf 2, den Schaft 3 sowie den an dessen Umfang ausgebildeten Gewindeteil 4. Während das erste Ende des Verbindungsbauteiles 1 mit Bezugszeichen 25 bezeichnet ist, ist das diesem gegenüberliegende, zweite Ende mit Bezugszeichen 27 gekennzeichnet.

Der gemäß Figur 3 dargestellte Ultraschallsensor 5 kann als Hochtemperatursensor eingesetzt werden. Der erfindungsgemäß vorgeschlagene Ultraschallsensor wird als Hochtemperatursensor in einem Temperaturbereich zwischen 200°C und 1000°C, bevorzugt in einem Temperaturbereich zwischen 250°C und 950°C sowie besonders bevorzugt innerhalb eines Temperaturbereichs zwischen 650°C und 900°C eingesetzt. In der dargestellten Ausführungsform wird die piezoelektrische Schicht 23 zum Beispiel aus ZnO gefertigt, während es sich bei dem Material, aus welchem das Verbindungsbauteil 1 - hier dargestellt als Schraube - gefertigt ist, bevorzugt um Sonderstähle, nicht-oxidierte Sonderstähle sowie hochlegierte Stähle handelt, die hochtemperaturbeständig sind.

Die piezoelektrische Schicht 21 kann neben dem bereits erwähnten ZnO auch aus Aluminiumnitrid, Siliziumoxid oder Bariumtitanat gefertigt werden. Bei der mechanischen Schutzschicht 22 werden bevorzugt metallische Verbindungen mit N oder O verwendet, um die piezoelektrische Schicht 23 zu schützen. Die mechanische Schutzschicht 22 ist unterhalb der Elektrodenschicht 21, jedoch oberhalb der piezoelektrischen Schicht 23 angeordnet. Um das Eindringen von Fremdmolekülen, z. B. Wasserstoff, in die piezoelektrische Schicht 23 sowie die Oxidation und Deoxidation der piezoelektrischen Schicht 23 zu verhindern, sind die Einzelschichten 21, 22, 23 des Schichtaufbaus 20 des Ultraschallsensors 5 in die Ausnehmung bzw. Vertiefung 28 im Schraubenkopf 2 des Verbindungsbauteils 1 eingelassen. Durch die Ausnehmung 28 ist die piezoelektrischen Schicht 23 des Schichtaufbaus 20 auch von der Seite gegen hineindiffundierende Fremd-Moleküle sowie gegen Oxidation und Deoxidation geschützt.

Um die Eindiffusion von H₂- oder Wasser-Molekülen in das Innere der piezoelektrischen Schicht 23 zu verhindern, ist dafür Sorge zu tragen, dass die Elektrodenschicht 21 sowie die Schutzschicht 22 des Ultraschallsensors 5 kompakt und porenfrei ausgebildet sind und insbesondere keine Hohlräume bilden, innerhalb der sich die H₂- oder Wasser-Moleküle anlagern oder hineindiffundieren könnten. Das ist für die Wasser- bzw. Feuchtigkeitsbeständigkeit des Ultraschallsensors 5 erforderlich.

### Bezugszeichenliste

| | |
|---|---|
| 1 | Verbindungsbauteil |
| 2 | Schraubenkopf |
| 3 | Schaft |
| 4 | Gewindeteil |
| 5 | Ultraschallsensor |
| 6 | Schallpfad |
| 7 | Laufzeit Ultraschallsignal zwischen Ein- und Auskopplung aus Verbindungsbauteil 1 |
| 8 | Ultraschallpuls-Echo |
| 9 | elektronisches Ultraschallmessgerät |
| 10 | Pulsgenerator |
| 11 | Leistungsverstärker |
| 12 | Transientenrekorder |
| 13 | Vorverstärker |
| 14 | Rechner |
| 15 | Signalübertragungsleitung |
| | |
| 20 | Schichtaufbau Ultraschallsensor 5 |
| 21 | Elektrodenschicht |
| 22 | mechanische Schutzschicht |
| 23 | piezoelektrische Schicht |
| 24 | Anschluss Wechselspannung |
| 25 | erstes Ende (Stirnseite Schraubenkopf 2) |
| 26 | Abstand Einzelelektroden |
| 27 | zweites Ende (Gewindeauslauf Verbindungsbauteil) |
| 28 | Ausnehmung, Vertiefung |
| 29 | seitliche Begrenzungswand |

## Patentansprüche

1. Verbindungsbauteil (1) mit integriertem Ultraschallsensor (5) zur Bestimmung der Vorspannkraft oder der Spannkraft des Verbindungsbauteiles (1), wobei der Ultraschallsensor (5) einen Schichtaufbau (20) mit einer Elektrodenschicht (21), mindestens einer mechanischen Schutzschicht (22) und mindestens einer Schicht (23) aus einem Material mit piezoelektrischen Eigenschaften aufweist und die mindestens eine Elektrodenschicht (21), die mindestens eine mechanische Schutzschicht (22) und die mindestens eine Schicht (23) aus einem Material mit piezoelektrischen Eigenschaften an einem frei zugänglichen Ende (25, 27) des Verbindungsbauteiles (1) aufgesputtert angeordnet sind, **dadurch gekennzeichnet, dass** der Schichtaufbau (20) kompakt und porenfrei ausgeführt ist, der Ultraschallsensor (5) eingerichtet ist ein mehrfaches Durchlaufen eines Temperaturzyklus' mit einer kurzen Aufheizperiode, einer Periode, in der ein erhöhtes Temperaturniveau herrscht, und einer Abkühlperiode schadlos zu überstehen dadurch, daß die mindestens eine mechanische Schutzschicht (22) die Schicht (23) aus einem Material mit piezoelektrischen Eigenschaften von der Elektrodenschicht (21) trennt.

2. Verbindungsbauteil gemäß Anspruch 1, **dadurch gekennzeichnet, dass** das Verbindungsbauteil (1) als Hochtemperatursensor in einem Temperaturbereich zwischen 200°C und 1000°C, bevorzugt zwischen 250°C und 950°C und besonders bevorzugt innerhalb eines Temperaturbereiches zwischen 650°C und 900°C eingesetzt ist.

3. Verbindungsbauteil gemäß Anspruch 1, **dadurch gekennzeichnet, dass** dieses aus der Gruppe der nachstehend aufgeführten Materialien gefertigt ist: hochlegierte Stähle, Sonderstähle, Titan und dessen Legierungen, TiAl6V4, Aluminium und dessen Legierungen, Nickellegierungen (Inconnel), amagnetische Stähle, wie A286 oder Messing.

4. Verbindungsbauteil gemäß Anspruch 1, **dadurch gekennzeichnet, dass** die Schichtdicke der mechanischen Schutzschicht (22) um ein Mehrfaches geringer ist als die Schichtdicke der Schicht (23) aus dem piezoelektrische Eigenschaften aufweisenden Material.

5. Verbindungsbauteil gemäß Anspruch 1, **dadurch gekennzeichnet, dass** die Schichten (21, 22, 23) des Schichtaufbaus (20) eine Adhäsionskraft zwischen 20 N/mm² und 80 N/mm², bevorzugt von 50 N/mm² und besonders bevorzugt von 40 N/mm² in Bezug aufeinander aufgebracht sind.

6. Verbindungsbauteil gemäß Anspruch 1, **dadurch gekennzeichnet, dass** die Schicht (23) aus einem piezoelektrische Eigenschaften aufweisenden Material mit einer Adhäsionskraft von mehr als 40 Newton pro mm² auf erstes Ende (25) oder ein zweites Ende (27) des Verbindungsbauteils (1) aufgebracht ist.

7. Verbindungsbauteil gemäß Anspruch 1, **dadurch gekennzeichnet, dass** der Ultraschallsensor (5) nach Unterschreiten der Curie-Temperatur des Materials mit piezoelektrischen Eigenschaften in einer Schicht (23) aussagekräftige Ultraschallpuls-Echos (8) liefert.

8. Verbindungsbauteil gemäß Anspruch 1, **dadurch gekennzeichnet, dass** die Schichtdicke der Elektrodenschicht (21) < 30 µm.

9. Verbindungsbauteil gemäß Anspruch 1, **dadurch gekennzeichnet, dass** die Schichtdicke der mechanischen Schutzschicht (22) < 20 µm.

10. Verbindungsbauteil gemäß Anspruch 1, **dadurch gekennzeichnet, dass** die Schichtdicke der Schicht (23) aus einem Material mit piezoelektrischen Eigenschaften < 50 µm.

11. Verbindungsbauteil gemäß Anspruch 1, **dadurch gekennzeichnet, dass** das erste Ende (25) die Stirnseite eines Schraubenkopfes (2) ist.

12. Verbindungsbauteil gemäß Anspruch 1, **dadurch gekennzeichnet, dass** das zweite Ende (27) die Stirnseite am Ende eines Gewindeteils (4) ist.

13. Verbindungsbauteil gemäß Anspruch 1, **dadurch gekennzeichnet, dass** dieses als Schraube, als Hohlschraube, als Stehbolzen, als Bolzen, als Niet oder als Stift oder als Sonderbauteil für Luftfahrtanwendungen ausgebildet ist.

14. Verbindungsbauteil gemäß Anspruch 1, **dadurch gekennzeichnet, dass** der integrierte Ultraschallsensor (5) an dem frei zugänglichen ersten Ende (25) des Verbindungsbauteils (1) in eine dort, ausgebildete Ausnehmung oder Vertiefung (28) eingelassen ist.

15. Verbindungsbauteil gemäß Anspruch 14, **dadurch gekennzeichnet, dass** der Schichtaufbau (20) des Ultraschallsensors (5) in das erste Ende (25) oder das zweite Ende (27) des Verbindungsbauteiles (1) eingebettet ist.

## Claims

1. Connector component (1) with integrated ultrasonic sensor (5) for determining the prestressing force or the stressing force of the connector component (1), wherein the ultrasonic sensor (5) has a layer construction (20) having an electrode layer (21), at least one mechanical protection layer (22) and at least one layer (23) composed of a material having piezoelectric properties, and the at least one electrode layer (21), the at least one mechanical protection layer (22) and the at least one layer (23) composed of a material having piezoelectric properties are arranged in a manner applied by sputtering at a freely accessible end (25, 27) of the connector component (1), **characterized in that** the layer construction (20) is embodied compactly and in a manner free of pores, and the ultrasonic sensor (5) is configured to withstand, without being damaged, repeatedly undergoing a thermal cycle with a short heating period, a period in which an increased temperature level prevails, and a cooling period by virtue of the at least one mechanical protection layer (22) separating the layer (23) composed of a material having piezoelectric properties from the electrode layer (21).

2. Connector component according to Claim 1, **characterized in that** the connector component (1) is used as a high-temperature sensor in a temperature range of between 200°C and 1000°C, preferably between 250°C and 950°C, and particularly preferably within a temperature range of between 650°C and 900°C.

3. Connector component according to Claim 1, **characterized in that** it is produced from the group of materials presented below: high-alloy steels, special steels, titanium and alloys thereof, TiAl6V4, aluminum and alloys thereof, nickel alloys (Inconel), nonmagnetic steels such as A286 or brass.

4. Connector component according to Claim 1, **characterized in that** the layer thickness of the mechanical protection layer (22) is smaller by a multiple than the layer thickness of the layer (23) composed of the material having piezoelectric properties.

5. Connector component according to Claim 1, **characterized in that** the layers (21, 22, 23) of the layer construction (20) are applied an adhesion force between 20 N/mm² and 80 N/mm², preferably of 50 N/mm², and particularly preferably of 40 N/mm², in relation to one another.

6. Connector component according to Claim 1, **characterized in that** the layer (23) composed of a material having piezoelectric properties is applied with an adhesion force of more than 40 newtons per mm² to a first end (25) or a second end (27) of the connector component (1).

7. Connector component according to Claim 1, **characterized in that** the ultrasonic sensor (5) supplies meaningful ultrasonic pulse echoes (8) after the undershooting of the Curie temperature of the material having piezoelectric properties in a layer (23).

8. Connector component according to Claim 1, **characterized in that** the layer thickness of the electrode layer (21) is < 30 µm.

9. Connector component according to Claim 1, **characterized in that** the layer thickness of the mechanical protection layer (22) is < 20 µm.

10. Connector component according to Claim 1, **characterized in that** the layer thickness of the layer (23) composed of a material having piezoelectric properties is < 50 µm.

11. Connector component according to Claim 1, **characterized in that** the first end (25) is the end side of a screw head (2).

12. Connector component according to Claim 1, **characterized in that** the second end (27) is the end side at the end of a threaded part (4).

13. Connector component according to Claim 1, **characterized in that** it is embodied as a screw, as a hollow screw, as a stay bolt, as a bolt, as a rivet or as a pin or as a special component for aeronautics applications.

14. Connector component according to Claim 1, **characterized in that** the integrated ultrasonic sensor (5), at the freely accessible first end (25) of the connector component (1), is incorporated into a cutout or depression (28) formed there.

15. Connector component according to Claim 14, **characterized in that** the layer construction (20) of the ultrasonic sensor (5) is embedded into the first end (25) or the second end (27) of the connector component (1).

## Revendications

1. Composant de liaison (1) auquel est intégré un détecteur (5) d'ultrasons qui détermine la force de précontrainte ou la force de serrage du composant de liaison (1),
le détecteur (5) d'ultrasons présentant une structure stratifiée (20) dotée d'une couche d'électrode (21), d'au moins une couche de protection mécanique (22) et d'au moins une couche (23) en un matériau présentant des propriétés piézoélectriques et
la ou les couches d'électrode (21), la ou les couches de protection mécanique (22) et la ou les couches (23) en matériau présentant des propriétés piézoélectriques étant pulvérisées sur une extrémité (25, 27) librement accessible du composant de liaison (1),
**caractérisé en ce que**
la structure stratifiée (20) est compacte et exempte de pores,
**en ce que** le détecteur (5) d'ultrasons est conçu pour traverser sans dommage un cycle de température qui présente une courte période de chauffage, une période au cours de laquelle règne un haut niveau de température et une période de refroidissement, par le fait que la couche de protection mécanique (22) sépare la couche (23) en matériau à propriétés piézoélectriques de la couche d'électrode (21).

2. Composant de liaison selon la revendication 1, **caractérisé en ce que** le composant de liaison (1) est utilisé comme sonde de haute température dans une plage de température comprise entre 200°C et 1 000°C, de préférence entre 250°C et 950°C et de façon particulièrement préférable dans une plage de température comprise entre 650°C et 900°C.

3. Composant de liaison selon la revendication 1, **caractérisé en ce qu'**il est réalisé en l'un des matériaux de l'ensemble constitué des aciers fortement alliés, des aciers spéciaux, du titane et de ses alliages, du TiAl6V4, de l'aluminium et de ses alliages, les alliages de nickel (inconel), des aciers amagnétiques, par exemple l'acier A286, et du laiton.

4. Composant de liaison selon la revendication 1, **caractérisé en ce que** l'épaisseur de la couche de protection mécanique (22) est de plusieurs ordres de grandeurs plus petite que l'épaisseur de la couche (23) en matériau présentant des propriétés piézoélectriques.

5. Composant de liaison selon la revendication 1, **caractérisé en ce que** les couches (21, 22, 23) de la structure stratifiée (20) sont appliquées les unes sur les autres avec une force d'adhérence comprise entre 20 N/mm² et 80 N/mm², de préférence de 50 N/mm² et de façon particulièrement préférable de 40 N/mm².

6. Composant de liaison selon la revendication 1, **caractérisé en ce que** la couche (23) en matériau présentant des propriétés piézoélectriques est appliquée à une force d'adhérence supérieure à 40 Newton par mm² sur la première extrémité (25) ou sur une deuxième extrémité (27) du composant de liaison (1).

7. Composant de liaison selon la revendication 1, **caractérisé en ce que** le détecteur (5) à ultrasons délivre un écho (8) d'impulsions ultrasonores concluantes dans une couche (23) lorsque la température de Curie du matériau présentant des propriétés piézoélectriques n'est plus atteinte.

8. Composant de liaison selon la revendication 1, **caractérisé en ce que** l'épaisseur de la couche d'électrode (21) est < 30 µm.

9. Composant de liaison selon la revendication 1, **caractérisé en ce que** l'épaisseur de la couche de protection mécanique (22) est < 20 µm.

10. Composant de liaison selon la revendication 1, **caractérisé en ce que** l'épaisseur de la couche (23) en matériau présentant des propriétés piézoélectriques est < 50 µm.

11. Composant de liaison selon la revendication 1, **caractérisé en ce que** la première extrémité (25) est le côté frontal d'une tête filetée (2).

12. Composant de liaison selon la revendication 1, **caractérisé en ce que** la deuxième extrémité (27) est le côté frontal de l'extrémité d'une partie filetée (4).

13. Composant de liaison selon la revendication 1, **caractérisé en ce qu'**elle est configurée comme vis, comme vis creuse, comme goujon fixe, comme goujon, comme rivet, comme tige ou comme composant spécial pour applications aérospatiales.

14. Composant de liaison selon la revendication 1, **caractérisé en ce que** le détecteur (5) d'ultrasons intégré est introduit dans un logement ou un creux (28) formés dans la première extrémité (25) librement accessible du composant de liaison (1).

15. Composant de liaison selon la revendication 14, **caractérisé en ce que** la structure stratifiée (20) du détecteur (5) d'ultrasons est incorporée dans la première extrémité (25) ou dans la deuxième extrémité (27) du composant de liaison (1).
